# EUROPÄISCHE PATENTANMELDUNG

(11) **EP 1 257 024 A1**
(43) Veröffentlichungstag der Anmeldung: **13.11.2002**
(21) Anmeldenummer: 01111308.1
(22) Anmeldetag: 09.05.2001
(51) Int. Cl.: H01S 3/22, H01S 3/038

(54) **Gaslaserresonator mit TiO2-beschichteten Laserelektroden**

(71) Anmelder: TRUMPF LASERTECHNIK GmbH, D-71254 Ditzingen (DE)
(72) Erfinder: Speker, Nicolai, 71672 Marbach/Neckar (DE)
(74) Vertreter: KOHLER SCHMID + PARTNER

(57) **Zusammenfassung**

Bei einem Gaslaserresonator (1) mit einem Entladungsraum (2) ist mindestens eine darin vorgesehene Elektrode (3; 4) mit einer für das Lasergas katalytischen TiO₂-Schicht versehen. Durch eine TiO₂-beschichtete Laserelektrode können bei einem CO₂-Gaslaser die CO₂-Dissoziation des Lasergases reduziert und dadurch Wirkungsgrad und Leistung erhöht werden.

## Beschreibung

Die Erfindung betrifft einen Gaslaserresonator mit einem Entladungsraum und mindestens einer darin vorgesehenen Elektrode, die mit einem für das Lasergas katalytischen Material beschichtet ist, sowie ein Verfahren zum Beschichten von Elektroden.

Ein derartiger Gaslaserresonator ist beispielsweise durch die US 4,756,000 oder US 4,757,512 bekannt geworden.

Der Wirkungsgrad eines CO₂-Gaslasers und die maximale Laserleistung hängen entscheidend vom CO₂-Dissoziationsgrad ab. Je geringer der CO₂-Dissoziationsgrad ist, desto höher sind Wirkungsgrad und Laserleistung. Um die CO₂-Dissoziation nicht zu einem deutlichen Leistungsverlust führen zu lassen, müssen die Lasergase ausgetauscht und/oder Katalysatoren eingesetzt werden, die die CO₂-Dissoziation reduzieren.

Aus der US 4,756,000 ("Discharge driven gold catalyst with application to a CO₂ laser") und der US 4,757,512 ("Discharge driven silver oxide catalyst with application to a CO₂ laser") ist bekannt, dass durch Beschichtungen der Elektroden mit Gold oder Silberoxid der CO₂-Dissoziationsgrad reduziert werden kann. Allerdings sind die Materialkosten sehr hoch.

Es ist daher die Aufgabe der Erfindung, einen Gaslaserresonator der eingangs genannten Art dahingehend weiterzubilden, dass eine Reduzierung des Lasergas-Dissoziationsgrads sowie eine Erhöhung des Wirkungsgrads und der Laserleistung mit geringeren Kosten erreicht werden können, und ein geeignetes Beschichtungsverfahren für Elektroden anzugeben.

Diese Aufgabe wird erfindungsgemäß dadurch gelöst, dass die mindestens eine Elektrode mit einer Titanoxidverbindung-Schicht, insbesondere Titandioxid(TiO₂)-Schicht, versehen ist.

Versuche an einem CO₂-Gaslaser haben gezeigt, dass eine TiO₂-beschichtete Laserelektrode als Katalysator für das Lasergas wirkt und dadurch die CO₂-Dissoziation reduziert wird.

Bei einer besonders bevorzugten Ausführungsform der Erfindung ist der Entladungsraum ringförmig zwischen zwei koaxial angeordneten, rohrförmigen Elektroden gebildet und sind die Innenfläche der äußeren Elektrode und/oder die Außenfläche der inneren Elektrode mit der Titanoxidverbindung-Schicht, insbesondere TiO₂-Schicht, versehen.

Bei einer anderen besonders bevorzugten Ausführungsform ist der Entladungsraum ringförmig zwischen zwei koaxial angeordneten, rohrförmigen Elektroden gebildet und sind die Innenfläche der äußeren Elektrode mit der Titanoxidverbindung-Schicht, insbesondere TiO₂-Schicht, und die Außenfläche der inneren Elektrode mit einer Gold- oder Silberoxid-Schicht versehen. Bei dieser Ausführungsform ist nur die flächenmäßig größere Elektrode mit der kostengünstigen TiO₂-Schicht versehen, während die flächenmäßig kleinere Elektrode mit der teureren Gold- oder Silberoxidschicht beschichtet ist.

Vorzugsweise ist die Querabmessung der Elektroden sehr viel kleiner als die Längsabmessung und sind die Elektroden kreiszylinderförmig ausgebildet. In einer bevorzugten Ausführungsform ist der Laserresonator von einem Konusspiegel und einem Helixspiegel begrenzt.

Elektroden können durch Bedampfen, Sputtern oder Galvanisieren beschichtet werden. Allerdings sind diese Beschichtungsverfahren bei schwer zugänglichen Bauteilgeometrien, wie z.B. die Innenseite von rohrförmigen Elektroden mit einer Länge von 1000 mm und einem Durchmesser von 155 mm in koaxialen Laserresonatoren, nur bedingt geeignet.

Erfindungsgemäß wird daher vorgeschlagen, die mindestens eine Elektrode eines Laserresonators mit einem für das Lasergas katalytischen Material, insbesondere einer Titanoxidverbindung, vorzugsweise TiO₂, im Sol-Gel-Verfahren zu beschichten.

Das Sol-Gel-Verfahren dient zum Herstellen von dünnen Schichten aus metallorganischen Verbindungen und gliedert sich in zwei Teile. Einerseits wird aus metallorganischen Verbindungen, organischen Lösungsmitteln und speziellen Verbindungen ein Sol, d.h. eine Lösung mit Teilchengrößen zwischen 1 nm und 1000 nm hergestellt. Durch Destabilisierung eines solchen Sols kann eine Polymerisation von teilhydrolysierten Metallalkoholaten über das gesamte Volumen des Sols stattfinden, und es bildet sich ein Gel. Kennzeichen eines Gels ist, dass jedes Teilchen im Netzwerk eingebaut ist und alle Teilchen miteinander verbunden sind.

Gegenüber herkömmlichen Beschichtungsverfahren ergeben sich bei der TiO₂-Beschichtung mit dem Sol-Gel Verfahren folgende Vorteile:
- geringe Materialkosten;
- kostengünstige Beschichtungsverfahren, da keine aufwändigen Anlagen erforderlich sind;
- beliebige Formen und Oberflächengeometrien, auch innenliegende Flächen, können beschichtet werden.

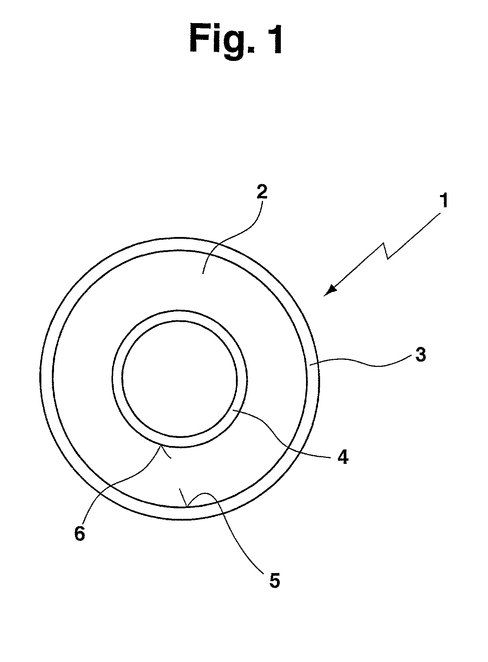

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die einzige Figur zeigt schematisch einen Axialschnitt durch den koaxialen Laserresonator **1** eines CO₂-Gaslasers. Der Laserresonator 1 umfasst einen ringförmigen Entladungsraum **2**, der zwischen zwei koaxial angeordneten, kreiszylinderförmigen Elektroden **3, 4** gebildet ist. Die Innenfläche **5** der äusseren Elektrode 3 und die Außenfläche **6** der inneren Elektrode 4 sind beide mit einer TiO₂-Schicht versehen. Vorzugsweise erfolgt die TiO₂-Beschichtung im Sol-Gel-Verfahren, um die schwer zugänglichen Bauteilgeometrien der Elektroden 3, 4 möglichst rein und homogen beschichten zu können. Anstatt mit TiO₂ kann die Außenfläche 6 der inneren Elektrode 4 auch mit anderen Titanoxidverbindungen, Gold oder Silberoxid beschichtet sein.

TiO₂, Gold und Silberoxid sind Katalysatoren, die das Oxidieren von Kohlenmonoxid (CO) zu Kohlendioxid (CO₂) bewirken und somit den CO₂-Dissoziationsgrad im Laserresonator 1 reduzieren. Je geringer der CO₂-Dissoziationsgrad ist, desto höher sind Wirkungsgrad und Leistung des CO₂-Lasers.

## Patentansprüche

1. Gaslaserresonator (1) mit einem Entladungsraum (2) und mindestens einer darin vorgesehenen Elektrode (3; 4), die mit einem für das Lasergas katalytischen Material beschichtet ist,
**dadurch gekennzeichnet,**
**dass** die mindestens eine Elektrode (3; 4) mit einer Titanoxidverbindung-Schicht, insbesondere TiO₂-Schicht, versehen ist.

2. Gaslaserresonator nach Anspruch 1, **dadurch gekennzeichnet, dass** der Entladungsraum (2) ringförmig zwischen zwei koaxial angeordneten, rohrförmigen Elektroden (3, 4) gebildet ist und dass die Innenfläche (5) der äußeren Elektrode (3) und/oder die Außenfläche (6) der inneren Elektrode (4) mit der Titanoxidverbindung-Schicht, insbesondere TiO₂-Schicht, versehen sind.

3. Gaslaserresonator nach Anspruch 1, **dadurch gekennzeichnet, dass** der Entladungsraum (2) ringförmig zwischen zwei koaxial angeordneten, rohrförmigen Elektroden (3, 4) gebildet ist und dass die Innenfläche (5) der äußeren Elektrode (3) mit der Titanoxidverbindung-Schicht, insbesondere TiO₂-Schicht, und die Außenfläche (6) der inneren Elektrode (4) mit einer Gold- oder Silberoxid-Schicht versehen sind.

4. Gaslaserresonator nach einem der vorhergehenden Ansprüche, **dadurch gekennzeichnet, dass** die Querabmessung der Elektroden (3, 4) sehr viel kleiner als die Längsabmessung ist.

5. Laserresonator nach einem der vorhergehenden Ansprüche, **dadurch gekennzeichnet, dass** die Elektroden (3, 4) kreiszylinderförmig sind.

6. Laserresonator nach einem der vorhergehenden Ansprüche, **dadurch gekennzeichnet, dass** der Laserresonator (1) von einem Konusspiegel und einem Helixspiegel begrenzt ist.

7. Laserresonator nach einem der vorhergehenden Ansprüche, **dadurch gekennzeichnet, dass** die mindestens eine Elektrode (3; 4) im Sol-Gel-Verfahren mit der Titanoxidverbindung, insbesondere mit TiO₂, beschichtet ist.

8. Verfahren zum Beschichten mindestens einer Elektrode (3; 4) eines Laserresonators (1) mit einem für das Lasergas katalytischen Material, insbesondere mit einer Titanoxidverbindung, vorzugsweise TiO₂, insbesondere nach einem der vorhergehenden Ansprüche, **dadurch gekennzeichnet, dass** die mindestens eine Elektrode (3; 4) mit dem katalytischen Material im Sol-Gel-Verfahren beschichtet wird.
